Europäisches Patentamt

European Patent Office

Office européen des brevets

(11) Numéro de publication: **0 316 237**
**A1**

## (12) DEMANDE DE BREVET EUROPEEN

(21) Numéro de dépôt: 88402835.8

(22) Date de dépôt: 10.11.88

(51) Int. Cl.⁴: **F 16 B 11/00**

(30) Priorité: 10.11.87 FR 8715575

(43) Date de publication de la demande:
17.05.89 Bulletin 89/20

(84) Etats contractants désignés: **DE FR GB IT NL**

(71) Demandeur: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06 (FR)**

(72) Inventeur: **Gilibert, Yvon**
**11 Rue Eugène Delacroix La Neuvillette**
**F-51100 Reims (FR)**

(74) Mandataire: **Bruder, Michel**
**Cabinet Michel Bruder 10, rue de la Pépinière**
**F-75008 Paris (FR)**

(54) Procédé d'assemblage par collage de deux substrats aboutés.

(57) La présente invention concerne un procédé d'assemblage par collage de deux substrats aboutés.

Ce procédé est caractérisé en ce qu'on conforme chacune des faces frontales des deux substrats (1,2) qui doivent être collées l'une à l'autre de manière qu'elle présente au moins une surface d'accostage (1a,1d;2d,2a) et au moins une surface active seule encollée (1b,1c;2b,2c), ces surfaces se raccordant l'une à l'autre, les positions, formes et étendues des surfaces actives (1b,1c;2b,2c) seules encollées étant définies, par rapport à celles des surfaces d'accostage (1b,1c;2b,2c) de telle façon que, lorsque les deux substrats (1,2) sont aboutés, les surfaces actives encollées prévues sur les deux substrats soient parallèles les unes aux autres en délimitant ainsi entre elles un volume contenant un joint de colle (4) d'épaisseur rigoureusement constante.

Fig. 1

Bundesdruckerei Berlin

**Description**

La présente invention concerne un procédé d'assemblage par collage de deux substrats aboutés.

L'assemblage par collage de pièces en matériaux divers, notamment métalliques, en céramique etc., tend actuellement à se développer considérablement dans de nombreux domaines industriels. S'il apparaît à première vue relativement simple de coller deux pièces aboutées, le collage est toutefois une opération délicate et il doit être effectué en respectant certaines conditions critiques si l'on veut obtenir un joint collé présentant toute garantie de résistance aux sollicitations mécaniques et d'environnement et de tenue dans le temps. L'une des conditions critiques qui doivent être respectées, lors de la réalisation d'un assemblage par collage, est que l'épaisseur du joint de colle formé doit être rigoureusement constante sur toute son étendue.

La présente invention a donc pour but de fournir un procédé d'assemblage qui permet, grâce à une conformation judicieuse des substrats à assembler, d'obtenir automatiquement une épaisseur constante du joint de colle formé.

A cet effet ce procédé d'assemblage par collage de deux substrats aboutés est caractérisé en ce qu'on conforme chacune des faces frontales des deux substrats qui doivent être collées l'une à l'autre de manière qu'elle présente au moins une surface d'accostage et au moins une surface active seule encollée, ces surfaces se raccordant l'une à l'autre, les positions, formes et étendues des surfaces actives seules encollées étant définies, par rapport à celles des surfaces d'accostage, de telle façon que, lorsque les deux substrats sont aboutés, les surfaces d'accostage des faces frontales de ces deux substrats soient appliquées directement l'une contre l'autre, sans interposition de colle, en définissant d'une manière précise la position relative des deux substrats, et que les surfaces actives encollées prévues sur les deux substrats soient parallèles les unes aux autres en délimitant ainsi entre elles un volume contenant un joint de colle d'épaisseur rigoureusement constante.

Le procédé suivant l'invention permet d'obtenir des joints de colle d'une épaisseur rigoureusement constante, qui varie, en fonction du type de colle utilisé, d'environ 40 micromètres à environ 0,5 millimètre. Par ailleurs la dimension moyenne des charges minérales ou élastomères lourds (nodules) contenus dans la colle doit être de l'ordre de grandeur de la rugosité des subjectiles ou surfaces actives encollées des deux substrats. Ce paramètre devient prépondérant pour des épaisseurs de joint faibles puisque la rugosité peut être de l'ordre de grandeur de l'épaisseur du joint. Le traitement pour rendre rugueuses les surfaces actives, avant encollage, est réalisé avant l'exécution des traitements chimiques habituels qui sont fonction des matériaux utilisés.

Ce procédé offre l'avantage que, si l'on fait en sorte que les surfaces d'accostage bordent totalement les subjectiles ou surfaces actives encollées, le joint de colle obtenu est totalement invisible de l'extérieur et il se trouve être protégé par les surfaces d'accostage. De ce fait on évite ainsi de voir le joint attaqué de l'extérieur par des agents agressifs, ce qui contribue à donner à l'assemblage une grande fiabilité et une longue durée de vie. Par ailleurs, lorsqu'il s'agit d'assembler des substrats en série, le procédé permet d'obtenir également une très bonne reproductibilité des qualités des assemblages obtenus.

On décrira ci-après, à titre d'exemples non limitatifs, diverses formes d'exécution de la présente invention, en référence au dessin annexé sur lequel :

La figure 1 est une vue en coupe axiale de deux substrats parallélépipédiques représentés respectivement avant et après l'opération d'assemblage par le procédé suivant l'invention.

La figure 2 est une vue en coupe axiale illustrant la mise en oeuvre du procédé avec deux substrats parallélépipédiques ayant des faces frontales de forme différente.

Les figures 3,4 et 5 sont des vues en coupe axiale de variantes de réalisation des faces frontales des substrats assemblés par le procédé suivant l'invention.

La figure 6 est une vue en coupe axiale de deux substrats cylindriques assemblés par collage et engagement d'une saillie tronconique dans un creux tronconique.

La figure 7 est une vue en coupe transversale faite suivant la ligne VII-VII de la figure 6.

Les figures 8,9 et 10 sont des vues en coupe axiale de variantes d'exécution des faces frontales des substrats représentés sur les figures 6 et 7.

La figure 11 est une vue en coupe axiale d'une autre variante d'exécution de deux substrats assemblés par collage.

La figure 12 est une vue en coupe axiale de deux substrats cylindriques assemblés par collage suivant l'invention.

La figure 13 est une vue en coupe transversale faite suivant la ligne XIII-XIII de la figure 12.

La figure 14 est une vue en coupe axiale d'une variante d'exécution de deux substrats cylindriques assemblés par collage.

La figure 15 est une vue en coupe transversale faite suivant la ligne XV-XV de la figure 14.

La figure 16 est une vue en coupe axiale de deux substrats allongés à section droite en forme de L, assemblés par collage suivant l'invention.

La figure 17 est une vue en coupe transversale faite suivant la ligne XVII-XVII de la figure 16.

La figure 18 est une vue en coupe transversale d'un substrat à section droite en forme de U assemblé par collage.

La figure 19 est une vue en coupe axiale d'une variante d'exécution de deux substrats à section droite en I, assemblés par collage.

La figure 20 est une vue en coupe transversale faite suivant la ligne XX-XX de la figure 19.

La figure 21 est une vue en coupe axiale de deux substrats parallélépipédiques pleins, à section droite carrée, assemblés par collage.

La figure 22 est une vue en coupe transversale faite suivant la ligne XXII-XXII de la figure 21.

La figure 23 est une vue en coupe axiale de deux substrats parallélépipédiques à section droite carrée, percés de trous axiaux, assemblés par collage.

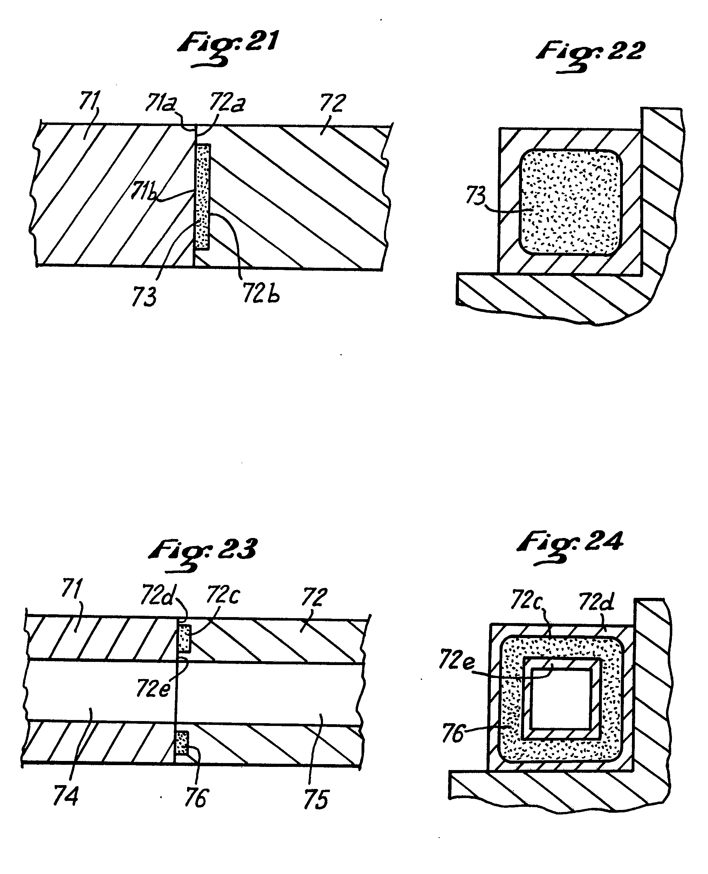

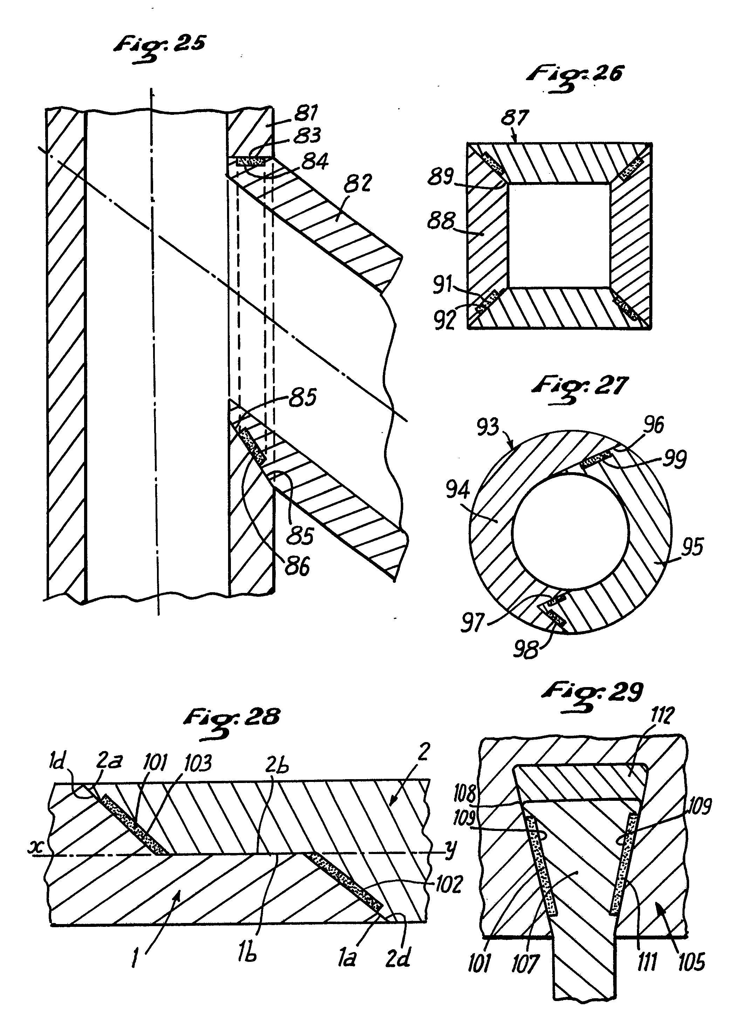

Le figure 24 est une vue en coupe transversale faite suivant la ligne XXIV-XXIV de la figure 23.

Les figures 25 à 31 sont des vues en coupe de diverses variantes d'exécution d'assemblages réalisés par le procédé suivant l'invention.

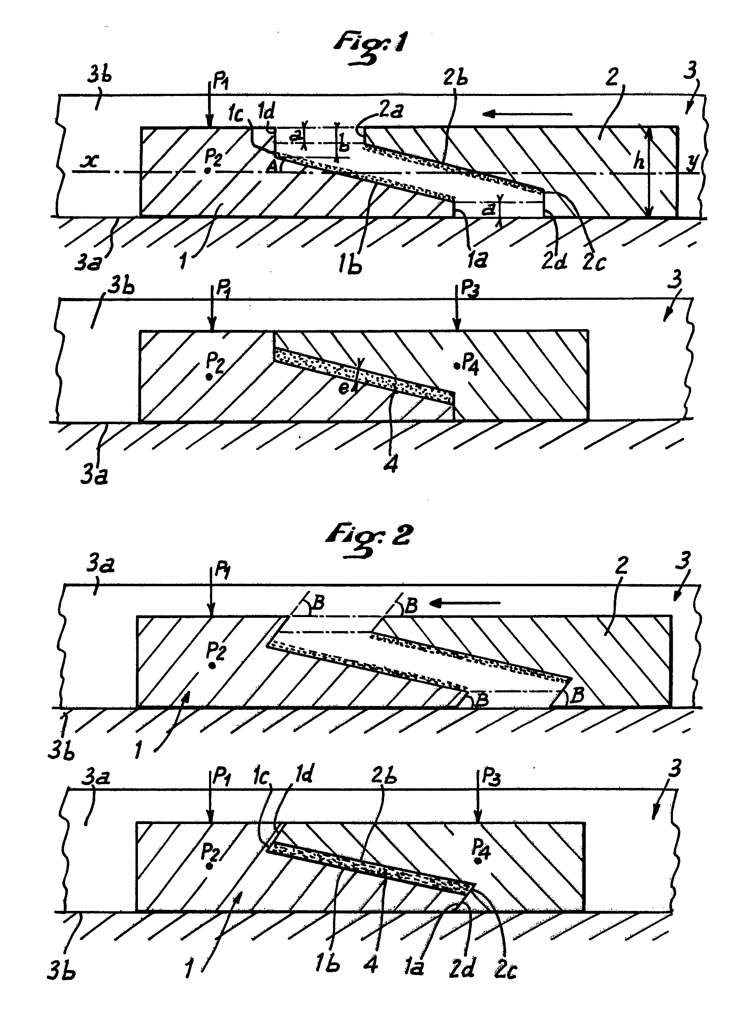

Dans la forme d'exécution de l'invention représentée sur la figure 1 le procédé d'assemblage suivant l'invention est appliqué au collage bout à bout de deux substrats 1,2 de forme parallélépipédique, de même section droite carrée ou rectangulaire et ayant un axe longitudinal commun xy. L'assemblage est réalisé par collage des faces frontales en regard de ces substrats 1 et 2, dans une règle 3 en Vé à 90o. Pour permettre d'obtenir un collage solide et résistant, les deux faces frontales en regard des deux substrats 1,2, qui doivent être aboutés, sont préalablement conformées de manière à présenter des surfaces d'accostage, qui sont destinées à venir en contact direct les unes avec les autres, sans interposition de colle, et des surfaces actives ou subjectiles destinés à être encollés et à intervenir effectivement pour donner la rigidité de l'assemblage.

Dans la forme d'exécution de l'invention représentée sur la figure 1 la face frontale du substrat 1 qui doit être collé, et qui se trouve en appui, par sa face horizontale inférieure, sur l'aile horizontale inférieure 3a de 1a règle en V 3, présente une face frontale qui comprend successivement, de la face latérale inférieure à la face latérale supérieure, une surface d'accostage inférieure 1a, qui s'étand transversalement et verticalement, c'est-à-dire perpendiculairement à l'axe horizontal commun xy des deux substrats 1,2, et de faible hauteur $a$, puis une surface active principale 1b, destinée à être encollée, laquelle est inclinée de bas en haut et de la droite vers la gauche, d'un angle A, par rapport à l'axe xy, puis une surface active secondaire 1c s'étendant verticalement vers le haut à partir de l'extrémité de la surface active principale 1b, s'étendant verticalement et transversalement, et enfin une surface d'accostage supérieure 1d, s'étendant transversalement et verticalement, de même hauteur $a$ que la surface d'accostage inférieure 1a et coplanaire avec la surface active secondaire 1c. La surface active secondaire 1c et la surface d'accostage supérieure 1d, qui sont coplanaires, ont ensemble une hauteur totale $b$.

La face frontale en regard de l'autre substrat 2 présente, en coupe longitudinal et verticale, un profil symétrique de celui de la face frontale du premier substrat 1 par rapport à un axe perpendiculaire au plan de la feuille de dessin. Autrement dit la face frontale du substrat 2 comporte, de la face latérale supérieure à la face inférieure, une surface d'accostage supérieure 2a, de hauteur $a$, s'étendant transversalement et verticalement, puis une surface active principale 2b inclinée de haut en base et de gauche à droite, de même angle d'inclinaison A que la surface active 1b, puis une surface active secondaire 2c s'étendant verticalement et transversalement, de hauteur égale à celle de la surface active secondaire 1c, et enfin une surface d'accostage inférieure 2d de hauteur $a$, s'étendant verticalement et transversalement et coplanaire avec la surface active secondaire 2c. La surface active secondaire 2c et la surface d'accostage inférieure 2d, qui sont coplanaires, ont ensemble une hauteur totale $b$.

Pour réaliser l'assemblage des deux substrats 1 et 2, on immobilise, dans la règle 3, l'un des substrats, par exemple le substrat 1, en exerçant sur ses deux faces accessibles des efforts respectifs représentés par P1 et P2 s'exerçant respectivement perpendiculairement aux deux branches 3a,3b de la règle en V 3, et ce après avoir encollé préalablement ses surfaces actives 1b et 1c. Ensuite, après avoir encollé de la même façon les surfaces actives 2b et 2c de l'autre substrat 2, on fait glisser ce substrat 2 en direction du premier substrat 1 maintenu fixe dans la règle, 3, jusqu'à ce que les surfaces d'accostage 2a,2b, non encol lées, du substrat 2 viennent en contact avec les surfaces d'accostage respectives 1d,1a du substrat 1. Une fois le substrat 2 plaqué en butée contre le substrat 1, par ses surfaces d'accostage 2a,2d en contact direct avec les surfaces d'accostage en regard 1d,1a du substrat 1, on l'immobilise dans la règle 3 en exerçant sur ses deux faces libres des efforts P3 et P4 respectivement perpendiculaires aux deux branches 3a,3b de la règle 3. On voit sur la figure 1 que, lorsque les deux substrats 1,2 sont aboutés, par leurs surfaces d'accostage 1d,1a et 2a,2d plaquées directement les unes contre les autres, les surfaces actives encollées 1b,1c du substrat 1 et 2b,2c du substrat 2 délimitent un volume s'étendant transversalement, de forme parallélépipédique à section droite en forme de parallélogramme, débouchant dans deux faces latérales opposées des deux substrats 1,2. Ce volume parallélépipédique constitue un réservoir pour le joint de colle obtenu 4 qui présente alors une épaisseur constante $e$ sur toute son étendue. Cette épaisseur constante est due au fait que la section droite du volume parallélépipédique est un parallélogramme précis dont les grands côtés ont la longueur des surfaces actives principales encollées 1b,2b et dont les petits côtés ont les longueurs des surfaces actives secondaires encollées 1c,2c. Cette épaisseur $e$ est égale à $e = (b - a) \cos A$.

De préférence les surfaces actives encollées 1b,2b sont rendues rugueuses et leur rugosité est choisie sensiblement égale à la dimension moyenne de particules constituant une charge contenue dans la colle du joint.

Dans la variante d'exécution de l'invention représentée sur la figure 2 les surfaces d'accostage 1a,1d du substrat 1 et 2a,2d du substrat 2 ainsi que les surfaces actives secondaires 1c, 2c ne sont plus perpendiculaires à l'axe commun xy des deux substrats 1 et 2 mais elles sont inclinées, tout en étant parallèles les unes aux autres, d'un même angle B par rapport à cet axe, cet angle étant par exemple de l'ordre de 60o. Là encore, lorsque les deux substrats 1,2 sont aboutés, les surfaces d'accostage 1a,1d, et 2d,2a étant accolées directement, les surfaces actives déli mitent entre elles un volume parallélépipédique, à section droite en forme de parallélogramme et qui est rempli de la colle constituant le joint 4.

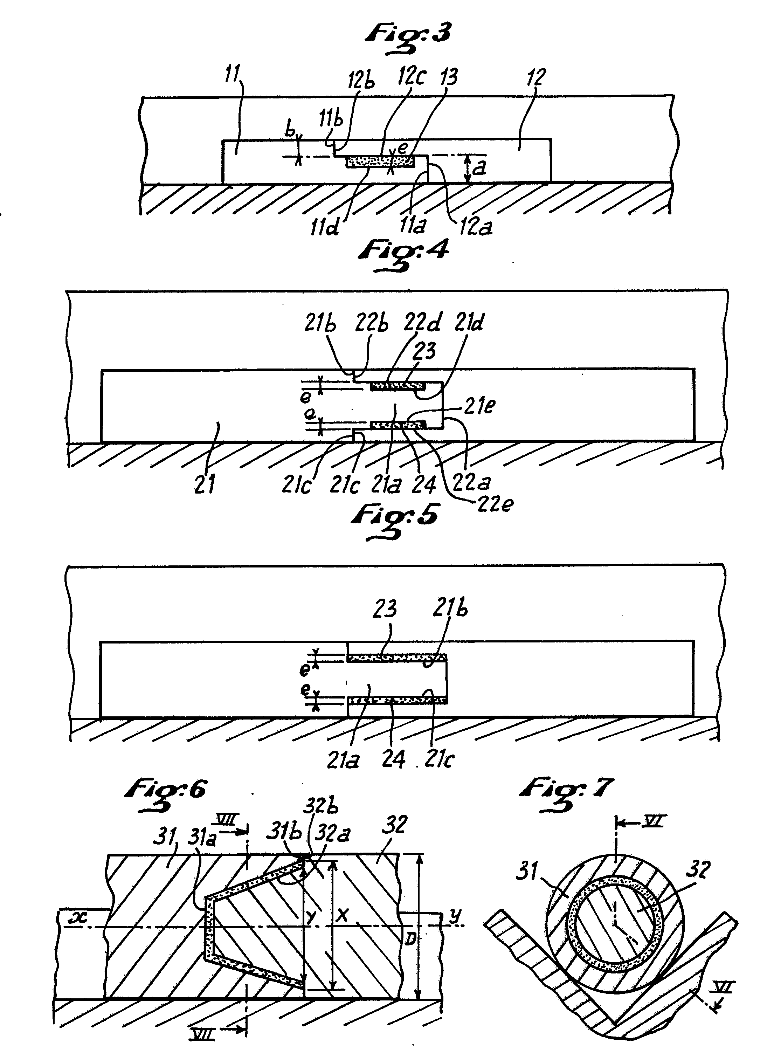

Dans la variante d'exécution de l'invention représentée sur la figure 3 les deux substrats 11,12, de forme parallélépipédique, de même section droite, comportent des faces frontales aboutées taillées en gradins superposés. Plus précisément ils présentent respectivement, en partant de leurs faces latérales inférieures jusqu'à leurs faces latérales supérieures, des surfaces d'accostage inférieures 11a,12a de même hauteur a, s'étendant verticalement et transversalement, et des surfaces d'accostage supérieures 11b,12b de même hauteur b, s'étendant verticalement et transversalement, les hauteurs a et b étant égales ou différentes. Dans le substrat 11 les surfaces d'accostage inférieure 11a et supérieure 11b sont reliées l'une à l'autre par une face intermédiaire longitudinale horizontale 11c dans laquelle est creusé un évidement horizontal et transversal 11d, de section droite rectangulaire et de profondeur constante e correspondant à l'épaisseur du joint de colle que l'on désire obtenir. Dans l'autre substrat 12 les surfaces d'accostage 12a et 12b sont reliées entre elles par une face intermédiaire longitudinale horizontale 12c, de même longueur que la face intermédiaire horizontale 11c, qui est en contact, par ses deux parties extrêmes, avec la face intermédiaire horizontale 11c du substrat 11 et qui dans sa partie centrale forme une surface active en contact avec la colle. La colle du joint 13 remplit le volume de forme parallélépipédique qui est délimité par l'évidement transversal et horizontal 11d, de profondeur constante e, creusé dans la face 11c du substrat 11 et par la face horizontale 12c du substrat 12. Là encore le volume formant réservoir de colle se traduit par la création d'un joint de colle 13 ayant une épaisseur e rigoureusement constante égale à la profondeur de l'évidement 11d.

L'évidement transversal 11d, formant réservoir de colle, peut s'étendre sur toute la largeur du substrat 11, en débouchant dans les faces latérales verticales de celui- ci. Il peut également s'arrêter à distance de ces faces latérales si bien que le joint de colle n'est alors pas visible de l'extérieur, les deux faces intermédiaires 11c,12c étant alors en contact par leurs parties latérales.

Suivant une variante l'assemblage pourrait comporter plusieurs gradins de différentes hauteurs, se succédant longitudinalement, chaque gradin délimitant un joint de colle tel que le joint 13 dans sa face horizontale.

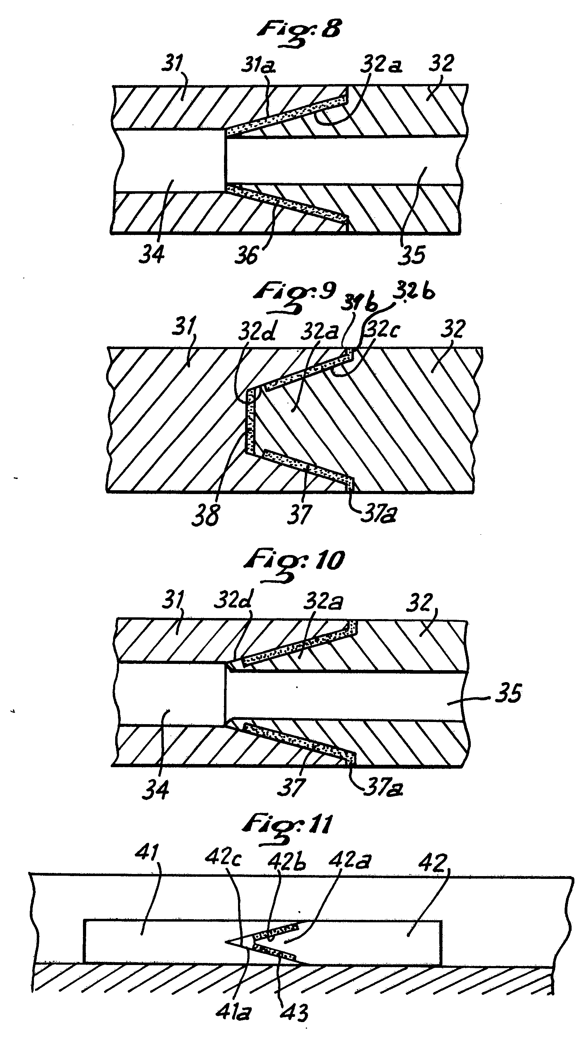

Dans la variante d'exécution de l'invention représentée sur la figure 4, utilisée avec deux substrats parallélépipédiques 21,22 de même section droite, l'un des substrats 21 est prolongé, en direction de l'autre substrat 22, par un tenon central 21a s'engageant dans une encoche formant mortaise 22a de mêmes dimensions, ménagée dans la face frontale de l'autre substrat 22. Ce tenon 21a délimite ainsi, dans le plan transversal dans lequel il est rattaché au corps du substrat 21, deux surfaces d'accostage coplanaires verticales et transversales, à savoir une surface d'accostage supérieure 21b et une surface d'accostage inférieure 21c qui sont situées de part et d'autre du tenon 21 et qui ont des hauteurs égales ou différentes. De la même façon la mortaise 22a délimite ainsi, dans la face frontale dans laquelle elle est creusée, deux surfaces d'accostage coplanaires et transversales, à savoir une surface d'accostage supérieure 22b et une surface d'accostage inférieure 22c qui ont des hauteurs respectivement égales à celles des surfaces d'accostage 231b, 21c. Dans ses faces latérales supérieure et inférieure opposées le tenon 21a est creusé d'évidements respectifs 21d,21e de même longueur et de même profondeur e, qui sont fermés par les faces latérales respectives 22d, 22e de la mortaise 22a, pour délimiter des volumes parallélépipédiques contenant des joints de colle 23,24 d'épaisseur constante e.

Dans la variante d'exécution de l'invention représentée sur la figure 5 le tenon 21a a, sur toute sa longueur, une épaisseur constante inférieure à la largeur de la mortaise 22a si bien que ses deux faces latérales 21d,21e forment des surfaces actives encollées s'étendant en regard des faces latérales 22d,22e, également encollées, de la mortaise 22a. Là encore sont ainsi créés deux joints de colle 23,24, ayant chacun une épaisseur constantee, lesquels s'étendent de part et d'autre du tenon central 21a, sur toute la longueur de celui-ci dans la mortaise 22a.

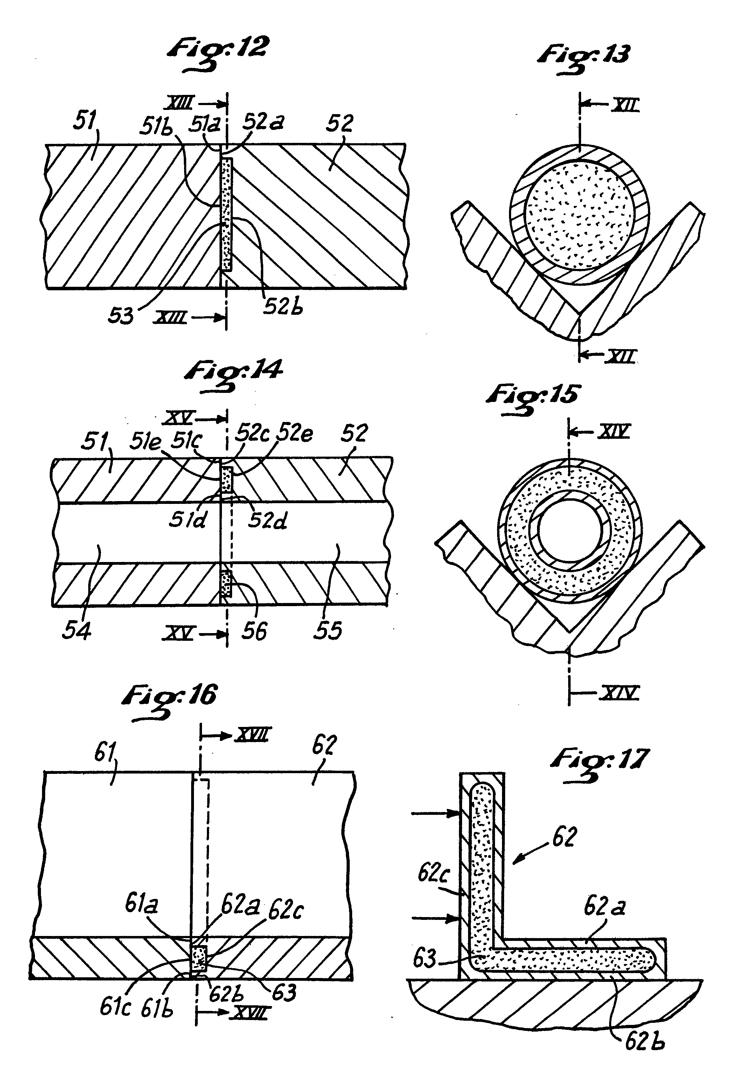

Dans la variante d'exécution de l'invention représentée sur les figures 6 et 7 les deux substrats coaxiaux 31,32 ont une forme cylindrique à section droite circulaire, de même diamètre D, d'axe commun xy. Le substrat gauche 31 présente, dans sa face frontale droite, un creux tronconique d'axe xy, dont la grande base a un diamètre X un peu inférieur au diamètre externe D des deux substrats 31,32. Ce creux tronconique délimite ainsi, dans la face frontale du substrat gauche 31, une surface d'accostage annulaire 31b de diamètre externe D et de diamètre interne X. De son côté le substrat droit 32 présente, sur sa face frontale gauche, une saillie tronconique 32a, de même angle de conicité que le creux tronconique 31a dans lequel elle est engagée et ayant une hauteur égale à la profondeur du creux tronconique 31a diminuée de l'épaisseur e du joint de colle que l'on veut obtenir. La grande base de la saillie tronconique 32a par laquelle elle se raccorde qu corps du substrat 32, a un diamètre B un peu inférieur au diamètre X de telle façon qu'une surface d'accostage annulaire transversale 32b soit formée à la périphérie de la face frontale du substrat 32, tout autour de la grande base de la saillie tronconique 32a. Lorsque les deux substrats 31,32 sont aboutés, les surfaces d'accostage 31b,32b sont plaques directement l'une contre l'autre, coaxialement, et la paroi latérale tronconique du creux 31a et la paroi latérale tronconique de la saillie 32a délimitent entre elles un volume annulaire tronconique d'épaisseur constante e contenant un joint de colle 33. Par ailleurs comme la hauteur de la saillie tronconique 32a est égale à la profondeur du creux tronconique 31a diminuée de l'épaisseur e, un espace vide circulaire transversal, d'épaisseur e, est formé entre les petites bases du creux tronconique 31a et de la saillie tronconique 32a. On obtient là encore un joint de colle 33 qui présente partout une épaisseur constante e entre les surfaces tronconiques et les petites bases, constituant des surfaces actives encollées, du creux tronconique 31a et de la saillie 32a.

Dans la variante d'exécution de l'invention représentée sur la figure 8 les substrats 31,32 sont percés respectivement de trous coaxiaux 34,35 de diamètres différents. Dans ce cas le creux tronconique 31a se raccorde au trou axial 34 qui débouche dans le creux par un orifice coïncidant avec la petite base du creux 31a, tandis que de la même façon le trou axial 35 du substrat 32, de plus petit diamètre que le trou 34, débouche dans le plan transversal de la petite base de la saillie tronconique 32a par un orifice coïncidant avec cette petite base. De ce fait les parois latérales tronconiques du creux 31a et de la saillie 32a délimitent un volume tronconique contenant un joint de colle 36 d'épaisseur constante e, qui est limité à une seule surface tronconique, c'est-à-dire sans prévision d'une partie circulaire centrale du joint de colle comme dans le cas des figures 6 et 7.

Dans la variante d'exécution de l'invention représentée sur la figure 9 la saillie tronconique 32a présente, dans sa surface latérale tronconique, une gorge 32c à section droite rectangulaire, de faible profondeur e. Cette gorge 32c s'étend jusqu'à la grande base de la saillie tronconique 32a. Par ailleurs la saillie tronconique 32a qui a une hauteur égale à la profondeur du creux 31a, présente, à proximité de sa petite base qui a un diamètre légèrement supérieur à celui de la petite base du creux 31a, , une partie tronconique 32d formant surface d'accostage s'étendant à partir de la petite base jusqu'à la gorge 32c et dont le diamètre est tel qu'elle vient en contact direct avec une partie de la surface tronconique du creux 32a, proche de sa petite base, formant l'autre surface d'accostage. La petite base de la saillie tronconique 32a est ainsi maintenue à la distance e de la petite base tronconique du creux 31a. De ce fait l'assemblage est réalisé qu moyen de deux joints de colle. Un premier joint de colle tronconique 37 d'épaisseur e est délimité entre la gorge 32c de la saillie tronconique 32a et la surface latérale tronconique du creux 31a, sur la plus grande partie de la profondeur de celui-ci, ce joint étant prolongé vers l'extérieur par une partie annulaire 37a s'étendant entre les surfaces annulaires transversales 31b,32b qui ne constituent plus des surfaces d'accostage, dans ce cas, du fait qu'elles sont séparées de la distance e correspondant à l'épaisseur du joint de colle. Un second joint de colle circulaire 38, d'épaisseur e, s'étend transversalement entre les deux petites bases du creux tronconique 31a et de la saillie tronconique 32a.

Dans la variante d'exécution de l'invention représentée sur la figure 10 les deux substrats 31,32 sont percés des trous axiaux respectifs 34,35, comme dans le cas illustré sur la figure 8. L'assemblage des deux substrats 31,32 est assuré par le seul joint de colle tronconique 37,37a d'épaisseur constante e. Là encore la surface d'accostage tronconique extrême 32d de la saillie 32a est en contact avec une partie de la surface latérale tronconique du creux 31a qui part de la petite base de celui-ci.

Dans la variante d'exécution de l'invention représentée sur la figure 11 lest substrats 41,42 présentent respectivement, dans leurs faces frontales aboutées,un creux conique 41a et une saillie conique 42a de mêmes dimensions et de même angle de conicité de manière à pouvoir être emboîtés étroitement l'un dans l'autre. La surface latérale conique de la saillie conique 42a est creusée d'une gorge tronconique 42b à section droite rectangulaire et de profondeur constante e qui délimite, avec la surface latérale du creux 41a, un joint de colle annulaire tronconique 43, d'épaisseur constante e. La point 42c de la saillie conique 42a est engagée étroitement dans le fond du creux tronconique 31a et elle forme avec ce fond des surfaces d'accostage.

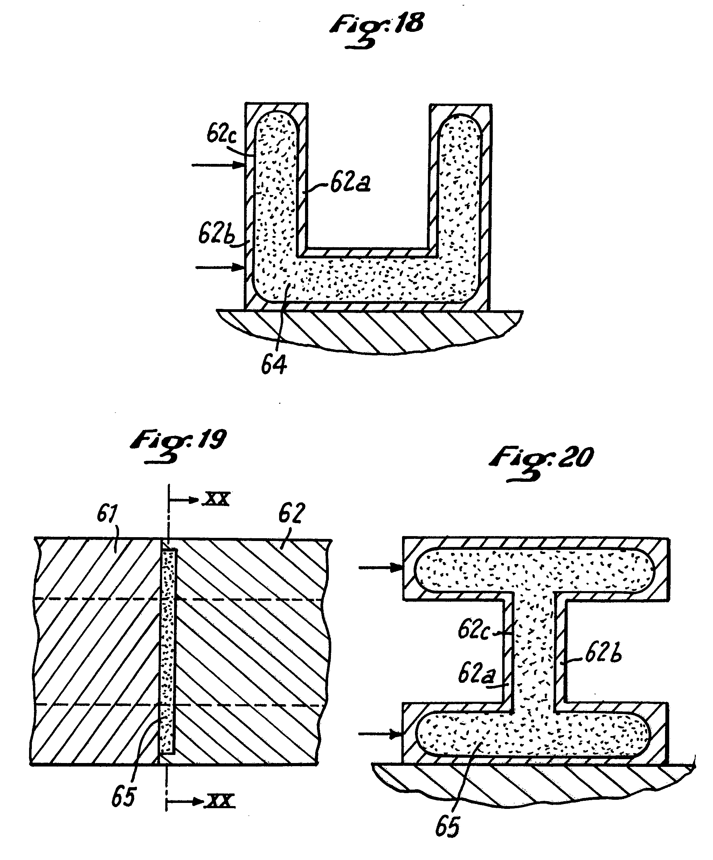

Dans la variante d'exécution de l'invention représentée sur les figures 2 et 13 les deux substrats 51,52 sont constitués par des pièces cylindriques pleines, de section droite circulaire, de même diamètre. La face frontale droite du substrat gauche 51 est plane et transversale et elle comprend une partie périphérique annulaire 51a formant surface d'accostage, et une partie centrale circulaire 51b formant surface active encollée. En regard la face frontale gauche du substrat droit 52 présente une surface d'accostage périphérique annulaire 52a qui est en saillie par rapport à un évidement central circulaire 52b de profondeur constante e. Cet évidement 52b délimite, avec la surface active centrale 51b, un volume cylindrique, de section droite circulaire, dans lequel est contenu un joint de colle 53 d'épaisseur constante e.

Dans la variante d'exécution de l'invention représentée sur les figures 14 et 15 les deux substrats 51,52 sont percés de trous axiaux respectifs 54,55 de même diamètre. La face frontale annulaire droite du substrat gauche 51 comprend deux surfaces d'accostage annulaires 51c,51d encadrant une surface active encollée annulaire centrale 51e. La face frontale annulaire gauche du substrat droit 52 présente deux surfaces d'accostage annulaires externe 52c et interne 52d lesquels sont délimitées de part et d'autre d'une gorge annulaire coaxiale 52e à section droite rectangulaire et de profondeur constante e. La surface active encollée 51e et la surface active constituant la paroi de la gorge 52e délimitent un volume annulaire dans lequel est contenu un joint de colle 56 d'épaisseur constante e.

Dans la variante d'exécution de l'invention représentée sur les figures 16 et 17 les deux substrats 61,62 sont constitués chacun par un profilé de même section droite, en forme de L, la face frontale droite en forme de L du substrat gauche 61 est plane et elle définit deux surfaces d'accostage coplanaires parallèles en forme de L 61,61b, délimitant entre elles une surface active encollée 61c également en forme de L. En regard la face frontale gauche du substrat droit 62 présente deux surfaces d'accostage 62a,62b en forme de L, suivant le profil du substrat, qui encadrent une gorge 62c, également en forme de L, laquelle est creusée dans la face frontale et présente une section droite rectangulaire de profondeur e. Cette gorge 62c ne débouche pas à l'extérieur du substrat 62, comme on peut le voir sur la figure 17. Les deux surfaces actives encollées 61c,62c délimitent ainsi un volume contenant un joint de colle 63 ayant une forme semblable à celle de la section droite des substrats 61,62 c'est-à-dire en forme de L, d'épaisseur constante e.

Dans la variante d'exécution de l'invention représentée sur la figure 18, qui est voisine de celle illustrée sur les figures 16 et 17, les substrats ont chacun une section droite en forme de U et de cette façon les surfaces d'accostage 62a,62b ainsi que la gorge 62c du substrat droit 62 ont chacune une forme de U comme il apparaît sur la figure 18. Le joint de colle 64 ainsi obtenu a également une forme en U.

Dans la variante d'exécution de l'invention représentée sur les figures 19 et 20 les deux substrats 61,62 ont chacun une section droite en forme en I et la gorge 62c qui est creusée dans la face frontale gauche du substrat droit 62 a également une forme en I de plus petite largeur comme on peut le voir sur la figure 20. Les surfaces d'accostage 62a,62b du substrat 62 sont constituées par la bordure de la gorge 62c en I. De ce fait on obtient un volume contenant un joint de colle 65 ayant lui aussi une forme en I.

Dans la variante d'exécution de l'invention représentée sur les figures 21 et 22 les deux substrats 71 et 72, de forme parallélépipédique, ont une section droite carrée ou rectangulaire. La face frontale droite du substrat gauche 71 qui est totalement plane, comprend une surface d'accostage périphérique 71a de forme carrée (ou rectangulaire), entourant une surface active centrale carrée (ou rectangulaire) 72b. En regard la face frontale gauche du substrat droit 72 présente une surface d'accostage périphérique 72a, de forme carrée (ou rectangulaire), laquelle entoure un évidement central 72b de profondeur constante e. Cet évidement a une section transversale carrée (ou rectangulaire) et on forme ainsi un volume contenant un joint de colle 73 ayant la forme d'un prisme droit à section droite carrée et d'épaisseur constante e.

Dans la variante d'exécution de l'invention représentée sur les figures 23 et 24 les substrats 71,72 à section droite carrée (ou rectangulaire) sont percés de trous axiaux carrés (ou rectangulaires) 74,75, de mêmes dimensions. Les faces frontales en contact ont ainsi la forme d'anneaux carrés. La face frontale droite du substrat gauche 71 est totalement plane tandis que la face frontale gauche du substrat droit 72 est creusée d'une gorge 72c, de profondeur constante e, s'étendant tout autour du trou central 75 en ayant une forme carrée (ou rectangulaire). Sa section droite est rectangulaire et elle est fermée par la face frontale en regard du substrat 71. Cette gorge 72c délimite comme précédemment des surfaces d'accostage carrées (ou rectangulaires) 72d,72e qui sont situées de part et d'autre de la gorge 72c, respectivement à l'extérieur et à l'intérieur, et qui coopèrent avec des surfaces d'accostage correspondantes constituées par les parties en regard de la face frontale du substrat 71. Dans la gorge 72c est ainsi formé un joint de colle 76 ayant une forme annulaire carrée (ou rectangulaire) et une épaisseur constante e.

La figure 25 illustre l'application du procédé suivant l'invention à l'assemblage, par collage, de deux tubes 81,82 inclinés l'un par rapport à l'autre. La paroi latérale du tube 81 est percée d'une ouverture elliptique 83 dans laquelle est collée l'extrémité de l'autre tube 82. Cette partie extrême est entaillée de manière à présenter une surface d'appui correspondant à la forme de celle de l'ouverture 83 du tube 81. Dans cette surface d'appui est creusée une gorge 84 qui délimite, de part et d'autre, des surfaces d'accostage 85, la gorge 84 contenant un joint de colle 86 ayant une épaisseur constante.

La figure 26 représente une poutre composite 87 à section droite carrée ou rectangulaire laquelle est constituée de quatre éléments 88 perpendiculaires les uns aux autres et qui sont accolés les uns aux autres par des faces d'appui 89 inclinées à 45o par rapport au plan de chaque élément. Dans la face d'appui 89 située à l'une des extré mité est creusée une gorge 91 de profondeur constante, contenant un joint de colle 92, et délimitant de chaque côté des surfaces d'accostage.

La figure 27 représente un tube 93 formé par l'assemblage de deux segments de tube 94 et 95, de mêmes diamètres, à sections droites en forme de segments d'anneau. Les deux segments de tube 94,95 sont accolés suivant soit un plan de joint 96, soit suivant deux plans de joint 97 et 98 formant une zone d'assemblage en V. A l'endroit de chaque plan de joint une gorge 99, de profondeur constante, est prévue pour contenir un joint de colle d'épaisseur constante et délimiter de chaque côté des surfaces d'accostage.

La figure 28 représente une variante d'exécution des assemblages illustrés sur les figures 1 et 2. Dans ce cas les surfaces d'accostages 1a-1d du substrat 1 et 2a-2d du substrat 2 sont inclinées, en étant parallèles les unes aux autres, d'un même angle B par rapport à l'axe longitudinal x,y, cet angle étant obtus et ayant par exemple une valeur de l'ordre de 135o. Les surfaces d'accostages 2a,2d du substrat 2 ont entaillées partiellement de gorges 101,102 de profondeur constante et contenant des joints de colle respectifs 103,104. Part ailleurs les surfaces intermédiaires 1b,2b des substrats 1 et 2 s'étendent parallèlement à l'axe longitudinal x,y, à mi-épaisseur, et sont accolées l'une à l'autre sans interposition de colle. Ces surfaces définissent également un plan de guidage et d'accostage.

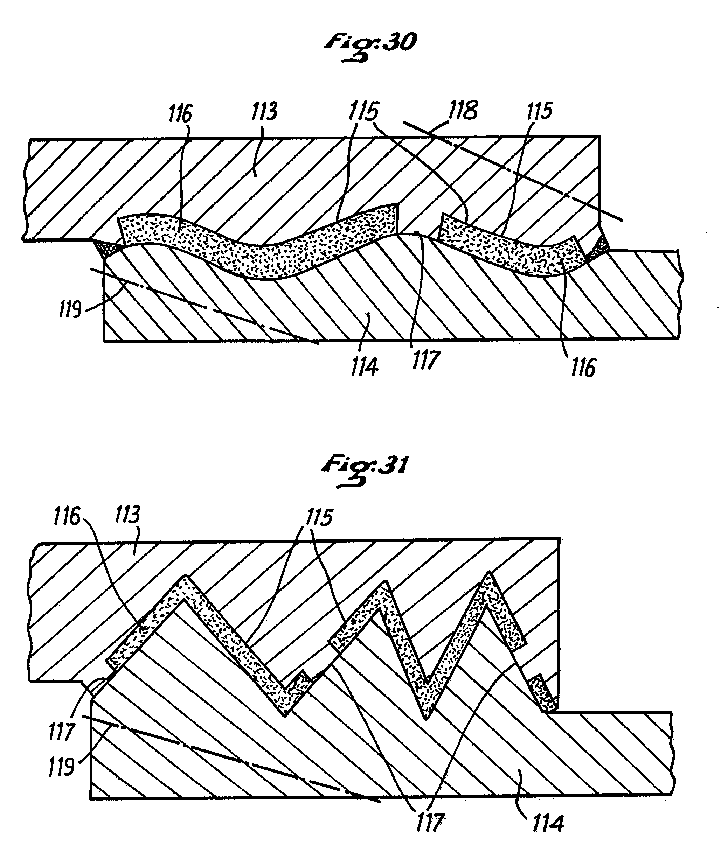

Dans la variante d'exécution représentée sur la figure 29 deux pièces 105,106 sont reliées par un assemblage du type à queue d'aronde. La pièce 106 présente à cet effet une saillie 107 de section droite trapézoïdale laquelle est engagée dans une rainure 108 de l'autre pièce 105, rainure 108 présentant également une forme trapézoïdale mais de profondeur supérieure à la hauteur de la saillie trapézoïdale 107. Des gorges 109 de profondeur constante sont creusées dans les faces latérales inclinées de la saillie trapézoïdale 107 et ces gorges contiennent des joints de colle 111. Les gorges 109 délimitent, comme dans les cas précédents, des surfaces d'accostage de part et d'autre de chaque gorge. L'espace délimité entre les grandes bases de la saillie trapézoïdale 107 et de la rainure trapézoïdale 108 peut être comblé avec une cale 112 de forme correspondante, en un matériau approprié ou bien encore cet espace peut être rempli de colle.

Les figures 30 et 31 illustrent l'assemblage de deux substrats 113,114 dont les parties extrêmes sont accolées latéralement. Les surfaces des deux substrats 113,114 qui sont en contact l'une avec l'autre ont une section droite de forme soit ondulée (figure 30) soit de ligne brisée (figure 31). La surface de contact de l'un des substrats, en l'occurrence celle du substrat 113, est creusée de gorges 115 de profondeur constante et qui contiennent des joints de colle 116 d'épaisseur constante. Entre les gorges 115 sont définies, comme dans les formes d'exécution précédentes, des surfaces d'accostage 117. Les extrémités des deux substrats 113,114 peuvent être découpées au laser ou par un jet d'eau, suivant les plans 118,119.

Bien que dans toutes les formes d'exécution du procédé qui ont été décrites précédemment il ait été indiqué que les substrats étaient assemblés par des joints de celle, il va de soi que cet assemblage pourrait être également réalisé au moyen de mats préalablement encollés, ces mats étant logés dans les espaces, de profondeur constante, ménagés entre les surfaces d'accostage et étant de ce fait ramenés à une épaisseur constante, après pressage des deux substrats l'un contre l'autre.

## Revendications

1.- Procédé d'assemblage par collage de deux substrats aboutés caractérisé en ce qu'on conforme chacune des faces frontales des deux substrats (1,2) qui doivent être collées l'une à l'autre de manière qu'elle présente au moins une surface d'accostage (1a,1d;2d,2a) et au moins une surface active seule encollée (1b,1c;2b,2c) , ces surfaces se raccordant l'une à l'autre, les positions, formes et étendues des surfaces actives (1b,1c;2b,2c) seules encollées étant définies, par rapport à celles des surfaces d'accostage (1b,1c;2b,2c) de telle façon que, lorsque les deux substrats (1,2) sont aboutés, les surfaces d'accostage des faces frontales de ces deux substrats soient appliquées directement l'une contre l'autre, sans interposition de colle, en définissant d'une manière précise la position relative des deux substrats, et que les surfaces actives encollées prévues sur les deux substrats soient parallèles les unes aux autres en délimitant ainsi entre elles un volume contenant un joint de colle (4) d'épaisseur rigoureusement constante.

2.- Procédé suivant la revendication 1 caractérisé en ce qu'on conforme chacune des faces frontales en regard des deux substrats (1,2) ayant une forme parallélépipédique, de même section droite, avec un axe longitudinal commun (xy), de manière qu'elle présente, en partant d'une première face latérale de chaque substrat (1,2) et en allant jusqu'à une seconde face latérale parallèle et opposée à la première, une première surface d'accostage (1a,2a), une surface active principale (1b,2b) destinés à être encollée, laquelle est inclinée d'un angle (A) par rapport à l'axe (xy), puis une surface active secondaire (1c,2c), s'étendant à partir de l'extrémité de la surface active principale (1b,2b), et enfin une seconde surface d'accostage (1d,2d), coplanaire avec la surface active secondaire (1c,2c), de même hauteur (a) que la première surface d'accostage (1a,2a) et parallèle à cette première surface d'accostage (1a,2a), la surface active secondaire (1c,2c) et la second surface d'accostage (1d,2d) qui sont coplanaires, ayant ensemble la même hauteur totale (b) sur chacun des substrats (1,2), les profils longitudinaux des deux faces frontales des deux substrats (1,2) étant symétriques l'un de l'autre par rapport à un axe perpendiculaire à l'axe longitudinal commun (x,y) et parallèle aux premières et secondes faces latérales opposées des deux substrats (1,2).

3.- Procédé suivant la revendication 2 caractérisé en ce que les surfaces d'accostage (1a,1d;2a,2d) et les surfaces actives secondaires (1c,2c) s'étendent perpendiculairement à l'axe longitudinal commun (xy).

4.- Procédé suivant la revendication 2 caractérisé en ce que les surfaces d'accostage (1a,1d;2a,2d) et les surfaces actives secondaire (1c,2c) sont inclinées d'un même angle (B) par rapport à l'axe longitudinal commun (xy)

5.- Procédé suivant la revendication 1 caractérisé en ce qu'on conforme les faces frontales en regard des deux substrats (11,12) ayant une forme parallélépipédique, de même section droite, avec un axe longitudinal commun (xy), de manière qu'elles présentent, en partant d'une première face latérale de chaque substrat (11,12) et en allant jusqu'à une seconde face latérale parallèle et opposée à la première, des premières surfaces d'accostage (11a,12a) de même hauteur (a), des faces intermédiaires longitudinales (11c,12c), parallèles aux premières et secondes faces latérales opposées des deux substrats, et des secondes surfaces d'accostage (11b,12b) de même hauteur (b), la face intermédiaire longitudinale (11c) de l'un des substrats (11) étant creusée d'un évidement s'étendant transversalement, de section droite rectangulaire et de profondeur constante (e) correspondant à l'épaisseur du joint de colle que l'on désire obtenir, la face intermédiaire longitudinale (12c) de l'autre substrat (12), de même longueur que la face intermédiaire (11c) du premier substrat (11), étant en contact, par ses deux parties extrêmes, avec la face intermédiaire (11c) du substrat (11) et formant, dans sa partie centrale, une surface active en contact avec la colle contenue dans l'évidement (11d).

6.- Procédé suivant la revendication 1 caractérisé en ce qu'on conforme les faces frontales des deux substrats (21,22) de forme parallélépipédique, de même section droite, de telle façon que l'un des substrats (21) soit prolongé, en direction de l'autre substrat (22), par un tenon central (21a) s'engageant dans une encoche formant mortaise (22a) de mêmes dimensions, ménagée dans la face frontale de l'autre substrat (22), ce tenon (21a) délimitant ainsi, dans le plan transversal dans lequel il est rattaché au corps du substrat (21), deux surfaces d'accostage coplanaires (21b,21c) verticales et transversales, à savoir une surface d'accostage supérieure (21b) et une surface d'accostage inférieure (21c) qui sont situées de part et d'autre du tenon (21), et la mortaise (22a) délimitant, ainsi, dans la face frontale dans laquelle elle est creusée, deux surfaces d'accostage coplanaires verticales et transversales, à savoir une surface d'accostage supérieure (22b) et une surface d'accostage inférieure (22c) qui ont des hauteurs respectivement égales à celles des surfaces d'accostage opposées (21b,21c) et dans ses faces latérales supérieure et inférieure opposées le tenon (21a) est creusé d'évidements respectifs (21d,21e) de même longueur et de même profondeur (e), qui sont fermées par les faces latérales respectives (22d,22e) de la mortaise (22a), pour délimiter des volumes parallélépipédiques délimitant des joints de colle (23,24) d'épaisseur constante e.

7.- Procédé suivant la revendication 1 caractérisé en ce que le tenon (21a) a, sur toute sa longueur, une épaisseur constante inférieure à la largeur de la mortaise (22a) si bien que ses deux faces latérales (21d,21e) forment des surfaces actives encollées s'étendant en regard des faces latérales (22d,22e), également encollées, de la mortaise (22a), de manière à créer deux joints de colle (23,24) ayant chacun une épaisseur constante e, lesquels s'étendent de part et d'autre du tenon central (21a), sur toute la longueur de celui-ci dans la mortaise (22a).

8.- Procédé suivant la revendication 1 caractérisé en ce qu'on conforme les faces frontales des deux substrats coaxiaux (31,32), ayant une forme cylindrique à section droite circulaire, de même diamètre (D), d'axe longitudinal commun (xy), de manière qu'un premier substrat (31) présente, dans sa face frontale, un creux tronconique d'axe (xy), dont la grande base a un diamètre (X) un peu inférieur au diamètre externe (D) des deux substrats (31,32), ce creux tronconique délimitant ainsi, dans la face frontale du premier substrat (31), une surface d'accostage annulaire (31b) de diamètre externe (D) et de diamètre interne (X), le second substrat (32) présente, sur sa face frontale, une saillie tronconique (32a), de même angle de conicité que le creux tronconique (31a) dans lequel elle est engagée, et ayant une hauteur égale à la profondeur du creux tronconique

(31a) diminuée de l'épaisseur (e) du joint de colle que l'on veut obtenir, la grande base de la saillie tronconique (32a) par laquelle elle se raccorde au corps du second substrat (32), ayant un diamètre (B) un peu inférieur au diamètre (X) de telle façon qu'une surface d'accostage annulaire transversale (32b) soit formée à la périphérie de la face frontale du second substrat (32), tout autour de la grande base de la saillie tronconique (32a).

9.- Procédé suivant la revendication 8 caractérisé en ce que les substrats (31,32) sont percés respectivement de trous coaxiaux (34,35) de diamètres différents, le creux tronconique (31a) se raccorde au trou axial (34) du premier substrat (31) qui débouche dans le creux par un orifice coïncidant avec la petite base du creux (31a), tandis que de la même façon le trou axial (35) du second substrat (32), de plus petit diamètre que le trou (34), débouche dans le plan transversal de la petite base de la saillie tronconique (32a) par un orifice coïncidant avec cette petite base.

10.- Procédé suivant la revendication 1 caractérisé en ce qu'on conforme les faces frontales des deux substrats coaxiaux (31,32), ayant une forme cylindrique à section droite circulaire, de même diamètre (D), d'axe longitudinal commun (xy), de manière qu'un premier substrat (31) présen te, dans sa face frontale, un creux tronconique d'axe (xy), dont la grande base a un diamètre (X) un peu inférieur au diamètre externe (D) des deux substrats (31,32), le second substrat (32) présente, sur sa face frontale, une saillie tronconique (32a), de même angle de conicité que le creux tronconique (31a) dans lequel elle est engagée, et ayant une hauteur égale à la profondeur du creux tronconique (31a), la grande base de la saillie tronconique (32a) par laquelle elle se raccorde au corps du second substrat (32), ayant un diamètre (B) un peu inférieur au diamètre (X) de la grande base du creux tronconique (31a), la saillie tronconique (32a) présente, dans sa surface latérale tronconique, une gorge (32c) à section droite rectangulaire, de faible profondeur (e) et qui s'étend jusqu'à la grande base de la saillie tronconique (32a) et elle présente, à partir de sa petite base qui a un diamètre un peu supérieur à celui de la petite base du creux (31a), une partie tronconique (32d) formant surface d'accostage laquelle s'étend entre la petite base et la gorge (32c) et dont le diamètre est tel qu'elle vient en contact direct avec une partie de la surface tronconique du creux (32a), proche de sa petite base, formant l'autre surface d'accostage, si bien que la petite base de la saillie tronconique (32a) est ainsi maintenue à la distance (e) de la petite base tronconique du creux (31a), et que les surfaces annulaires transversales (31b, 32b) sont séparées de la distance (e) correspondant à l'épaisseur du joint de colle.

11.- Procédé suivant la revendication 1 caractérisé en ce qu'on conforme les faces frontales des deux substrats coaxiaux de manière que ces substrats (41,42) présentent respectivement, dans leurs faces frontales aboutées, un creux conique (41a) et une saillie conique (42a) de mêmes dimensions et de même angle de conicité de manière à pouvoir être emboîtés étroitement l'un dans l'autre, la surface latérale conique de la saillie conique (42a) est creusée d'une gorge tronconique (42b) à section droite rectangulaire et de profondeur constante (e) qui délimite, avec la surface latérale du creux (41a), un joint de colle annulaire tron conique (43), d'épaisseur constante (e), et la pointe (42c) de la saillie conique (42a) est engagée étroitement dans le fond du creux tronconique (31a) et elle forme avec ce fond des surfaces d'accostage.

12.- Procédé suivant la revendication 1 caractérisé en ce qu'on conforme les faces frontales des deux substrats coaxiaux (51,52), constitués par des pièces cylindriques pleines, de section droite circulaire, de même diamètre, de manière que la face frontale d'un premier substrat (51) soit plane et transversale et qu'elle comprenne une partie périphérique annulaire (51a) formant surface d'accostage, et une partie centrale circulaire (51b) formant surface active encollée, et qu'en regard la face frontale du second substrat (52) présente une surface d'accostage périphérique annulaire (52a) qui est en saillie part rapport à un évidement central circulaire (52) de profondeur constante e) qui délimite, avec la surface active centrale (51b), un volume cylindrique, de section droite circulaire, dans lequel est contenu un joint de colle (53) d'épaisseur constante (e).

13.- Procédé suivant la revendication 1 caractérisé en ce qu'on conforme les faces frontales des deux substrats coaxiaux cylindriques (51,52), de mêmediamètre externe, percés de trous axiaux respectifs (54,55) de même diamètre, de manière que la face frontale annulaire d'un premier substrat (51) comprenne deux surfaces d'accostage annulaires (51c,51d) encadrant une surface active encollée annulaire centrale (51e), et que la face frontale annulaire du second substrat (52) présente deux surfaces d'accostage annulaires externe (52c) et interne (52d) lesquelles sont délimitées de part et d'autre d'une gorge annulaire coaxiale (52e) à section droite rectangulaire et de profondeur constante (e) délimitant un volume annulaire dans lequel est contenu un joint de colle (56) d'épaisseur constante (e).

14.- Procédé suivant la revendication 1 caractérisé en ce que les substrats (61,62) sont constitués par deux profilés de même section droite, la face frontale d'un premier substrat (61) est plane et elle définit deux surfaces d'accostage coplanaires parallèles (61a,61b), délimi tant entre elles une surface active encollée et la face frontale du second substrat (62) présente deux surfaces d'accostage (62,62b) suivant le profil du substrat, qui encadrent une gorge (62c) de forme semblable à celle de la section droite du substrat, laquelle est creusée dans la face frontale et présente une section droite rectangulaire de profondeur constante (e), cette gorge (62c) ne débouchant pas à l'extérieur du second substrat (62) si bien que les deux surfaces actives encollées (61c,62c) délimitent un volume contenant un joint de colle (63) ayant une forme semblable à celle de la section droite des substrats (61,62) et une épaisseur constante e.

15.- Procédé suivant la revendication 1 caractérisé en ce que les deux substrats (71,72) ont une forme parallélépipédique, de même section droite carrée (ou rectangulaire), la face frontale d'un premier substrat (71) qui est totalement plane, comprend une surface d'accostage périphérique (71a) de forme carrée (ou rectangulaire), entourant une surface active centrale carrée (ou rectangulaire) (72b) et la face frontale du second substrat (72) présente une surface d'accostage périphérique (72a), de forme carrée (ou rectangulaire) laquelle entoure un évidement central (72b) de profondeur constante (e) dans lequel est formé le joint de colle.

16.- Procédé suivant la revendication1 caractérisé en ce que les substrats (71,72), de forme parallélépipédique, de même section doite carrée (ou rectangulaire), sont percés de trous axiaux carrés (ou rectangulaires) (74,75), de mêmes dimensions, la face frontale du premier substrat (71) est totalement plane tandis que la face frontale du second substrat (72) est creusée d'une gorge (72c), de profondeur constante (e), s'étendant tout autour du trou central (75) en ayant une forme carrée (ou rectangulaire) et délimitant le joint de colle.

17.- Procédé suivant l'une quelconque des revendications précédentes caractérisé en ce qu'on traite préalablement les surfaces actives destinées à être encollées pour les rendre rugueuses, la rugosité obtenue étant choisie de l'ordre de grandeur de la dimension moyenne des charges minérales ou élastomères lourds contenus dans la colle utilisée.

EP 0 316 237 A1

## Fig. 1

## Fig. 2

Fig.3

Fig.4

Fig.5

Fig.6   Fig.7

Fig.8

Fig.9

Fig.10

Fig.11

*Fig.12*

51  51b  51a  52a  52

53  XIII  52b

*Fig.13*

XII

XII

*Fig.14*

XV

51  51e  51c  52c  52e  52

51d  52d

54  XV  56  55

*Fig.15*

XIV

XIV

*Fig.16*

XVIII

61  62

61a  62a  62c

61c  61b  62b  63  XVIII

*Fig.17*

62

62c

62a

63

62b

## Fig:18

62c

62a

62b

64

## Fig:19

61

62

XX

65

XX

## Fig:20

62c

62a

62b

65

**Fig. 21**

71  71a  72a  72

71b

73  72b

**Fig. 22**

73

**Fig. 23**

71  72d  72c  72

72e

74  76  75

**Fig. 24**

72c  72d

72e

76

EP 0 316 237 A1

20 12 89

**Fig. 25**

**Fig. 26**

**Fig. 27**

**Fig. 28**

**Fig. 29**

EP 0 316 237 A1

Fig.30

Fig.31

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 8, no. 207 (M-327)[1644], 21 septembre 1984; & JP-A-59 96 028 (NISSAN JIDOSHA K.K.) 02-06-1984 <br> * Résumé * | 1-17 | F 16 B 11/00 |
| X | EP-A-0 194 020 (KEELGLEN) <br> * Revendications 1-3; figure 1 * | 1-17 | |
| X | EP-A-0 229 447 (HUFFY) <br> * Page 9, lignes 9-30; page 10, lignes 1-12; figures 2,3 * | 1-17 | |
| X | FR-A-2 329 884 (KLOCKNER-HUMBOLDT-DEUTZ) <br> * En entier * | 1-17 | |
| X | FR-A-2 072 357 (GARCIA) <br> * En entier * | 1-17 | |
| X | DE-A-1 400 906 (SCHARMANN) <br> * En entier * | 1-17 | **DOMAINES TECHNIQUES RECHERCHES (Int. Cl.4)** |
| A | PRODUCT ENGINEERING, vol. 48, no. 2, février 1977, pages 38-40, New York, US; "Key design factors make adhesive bonds more reliable" <br> * Page 38; figures * | | F 16 B |
| A | KONSTRUKTION, vol. 37, no. 8, août 1985, pages 309-312, Springer-Verlag, Berlin, DE; G. HÄHN: "Verbinden von Metall- und Kunststoffbauteilen durch eine neuartige Schnappverbindung" <br> * Pages 309,310 * | | |
| A | DE-B-1 126 586 (GRONAU) | | |

Le présent rapport a été établi pour toutes les revendications

| Lieu de la recherche | Date d'achèvement de la recherche | Examinateur |
|---|---|---|
| LA HAYE | 16-02-1989 | VAN DER WAL W |

EPO FORM 1503 03.82 (P0402)